# EUROPÄISCHE PATENTSCHRIFT

(11) **EP 2 409 045 B1**
(45) Veröffentlichungstag und Bekanntmachung des Hinweises auf die Patenterteilung: **23.01.2013**
(21) Anmeldenummer: 10709542.4
(22) Anmeldetag: 19.03.2010
(51) Int. Cl.: F16C 19/34, F16C 33/36, F16C 43/06, F16C 33/49

(54) **KUGELROLLENLAGER, INSBESONDERE ZUR AUFNAHME KOMBINIERTER RADIAL- UND AXIALLASTEN**
BALL ROLLER BEARING, IN PARTICULAR FOR ABSORBING COMBINED RADIAL AND AXIAL LOADS
PALIER A ROULEAUX SPHERIQUES, DESTINE EN PARTICULIER A RECEVOIR UNE CHARGE COMBINEE RADIALE ET AXIALE

(30) Priorität: 20.03.2009 DE 102009014169
(43) Veröffentlichungstag der Anmeldung: 25.01.2012
(73) Patentinhaber: Schaeffler Technologies AG & Co. KG, 91074 Herzogenaurach (DE)
(72) Erfinder: DÖPPLING, Horst, 91074 Herzogenaurach (DE); HOFMANN, Heinrich, 97422 Schweinfurt (DE); GEIGER, Ernst, 91352 Hallerndorf (DE); MASUR, Ernst, 97508 Untereuerheim (DE)
(86) Internationale Anmeldenummer: PCT/EP2010/053631
(87) Internationale Veröffentlichungsnummer: WO 2010/106174

(56) Entgegenhaltungen:
- DE-A1- 10 027 105
- DE-A1-102006 019 228
- GB-A- 141 694
- JP-A- 2006 250 200

## Beschreibung

### Gebiet der Erfindung

Die Erfindung betrifft ein Kugelrollenlager nach den oberbegriffsbildenden Merkmalen des Patentanspruchs 1, welches insbesondere vorteilhaft für Anwendungen mit hoher Kippsteifigkeit und kombinierten Radial- und Axialkräften, wie beispielsweise für die Lagerung von Bandspannrollen für den Zugmitteltrieb von Verbrennungsmotoren, einsetzbar ist.

### Hintergrund der Erfindung

Kugelrollenlager sind Wälzlager mit speziellen, als Kugelrollen ausgebildeten Wälzkörpern, die ausgehend von einer Kugelgrundform jeweils zwei von dieser Kugelgrundform abgeflachte, parallel zueinander angeordnete Seitenflächen aufweisen, zwischen denen jeweils die Laufflächen der Kugelrollen angeordnet sind. Ein solches Kugelrollenlager ist beispielsweise durch die zum Anmeldezeitpunkt der vorliegenden Patentanmeldung noch nicht veröffentlichte deutsche Patentanmeldung mit dem Akt.-Z. 10 2007 062 319.6 bekannt und besteht im Wesentlichen aus einem äußeren Lagerring und einem inneren Lagerring sowie aus einer Vielzahl zwischen diesen Lagerringen angeordneter Kugelrollen, die durch einen Lagerkäfig in Umfangsrichtung in gleichmäßigen Abständen zueinander gehalten werden. Die Kugelrollen weisen dabei zwischen ihren Seitenflächen eine Breite von etwa 70% des Durchmessers ihrer Kugelgrundform auf und rollen mit ihren Laufflächen in zwei in die Innenseite des äußeren Lagerrings und in die Außenseite des inneren Lagerrings eingearbeitete rillenförmigen Laufbahnen ab, deren Tiefe mit ca. 20% des Durchmessers der Kugelgrundform der Kugelrollen bemessen ist. Da der Abstand zwischen der Innenseite des äußeren Lagerrings und der Außenseite des inneren Lagerrings dadurch nur noch etwa 60% des Durchmessers der Kugelgrundform der Kugelrollen beträgt und die Kugelrollen somit nicht mehr wie üblich axial gerade durch den Abstand zwischen den Lagerringen hindurch in das Kugelrollenlager eingesetzt werden können, erfolgt das Befüllen dieses Kugelrollenlagers durch ein neuartiges Axial-Kipp-Exzentermontageverfahren, bei welchem der innere Lagerring der beiden in liegender konzentrischer Stellung zueinander angeordneten Lagerringe zur Herstellung eines größer als die Breite der Kugelrollen ausgebildeten Abstandes zwischen den Lagerringen zunächst zum einen entlang einer Lagerlängsmittelachse radial geringfügig beweglich sowie zum anderen auf einer axial versetzt höheren Ebene als der äußere Lagerring angeordnet ist. Der Weg der radialen Verschiebbarkeit des inneren Lagerrings auf der Lagerlängsmittelachse sowie die Höhe des axialen Versatzes der beiden Lagerringe zueinander beträgt dabei jeweils etwa 25% der Breite der Laufbahnen der Lagerringe des Kugelrollenlagers, da somit gewährleistet ist, dass vom Einfüllen der ersten Kugelrolle bis zum Einfüllen der letzten Kugelrolle der Abstand zwischen den Lagerringen immer größer als die Breite der Kugelrollen ist.

Die eigentliche Montage der Kugelrollen beginnt dann zunächst damit, dass eine erste mit ihren Seitenflächen zu den Lagerringen ausgerichteten Kugelrolle an die als Einfüllstelle vorgesehene Stelle des größten Abstandes zwischen den Lagerringen auf der Lagerlängsmittelachse dem Kugelrollenlager zugeführt und der innere Lagerring in eine exzentrische Anschlagstellung radial verschoben wird. Danach erfolgt ein aufeinander folgendes Einführen der Kugelrollen in einer zum äußeren Lagerring leicht angekippten Stellung in die Einfüllstelle zwischen den Lagerringen, bis der verbleibende freie Füllraum zwischen den Lagerringen nur noch etwa dem Durchmesser der Kugelgrundform einer einzelnen Kugelrolle entspricht. Nachdem alle vorgesehenen Kugelrollen in das Kugelrollenlager eingefüllt wurden, erfolgt ein axiales Absenken des inneren Lagerrings bei gleichzeitigem axialen Anheben des äußeren Lagerrings, so dass beide Lagerringe in einer gemeinsamen Ebene angeordnet und die in die Laufbahnen der Lagerringe gekippten Kugelrollen zwischen den Laufbahnen eingespannt sind. In dieser Stellung wird der äußere Lagerrings anschließend rotativ auf eine Drehzahl beschleunigt, bei der die Kugelrollen durch Eigenrotation und durch Fliehkraft sich selbsttätig aufrichten und eine gleichmäßig schräge Stellung innerhalb der Laufbahnen der Lagerringe einnehmen. Danach erfolgt dann ein gleichzeitiges axiales Absenken des inneren Lagerrings und des äußeren Lagerrings, bis die Kugelrollen in einer horizontal geraden Stellung in den Laufbahnen der Lagerringe angeordnet sind, sowie ein gleichmäßiges Verteilen der eingefüllten Kugelrollen auf dem Teilkreis des Kugelrollenlagers und das Einsetzen des Lagerkäfigs durch den Abstand zwischen den Lagerringen hindurch.

Ein derartiges Kugelrollenlager zeichnet sich zwar gegenüber einem baugleichen Rillenkugellager durch einen hohen Füllgrad mit Wälzkörpern und damit durch eine wesentlich gesteigerte radiale Tragfähigkeit aus, es hat aber gleichzeitig den Nachteil, dass dessen Belastbarkeit mit Axialkräften ziemlich enge Grenzen gesetzt sind und es somit für Anwendungen mit hoher Kippsteifigkeit und hohen kombinierten Radial- und Axialkräften ungeeignet ist.

Ein für solche Anwendungen mit hoher Kippsteifigkeit und kombinierten Radial- und Axialkräften geeignetes gattungsgemäßes Kugelrollenlager ist dagegen durch die DE 100 27 105 A1 vorbekannt. Auch dieses Kugelrollenlager besteht im Wesentlichen aus einem äußeren Lagerring und einem inneren Lagerring mit jeweils rillenförmigen Laufbahnen an deren Innen- und Außenseite sowie aus einer Vielzahl zwischen diesen Lagerringen in den Laufbahnen abrollender und in Umfangsrichtung durch einen Lagerkäfig in gleichmäßigen Abständen zueinander gehaltener Kugelrollen, die eine größer als der Radialabstand zwischen der Innenseite und der Außenseite der Lagerringe bemessene Breite zwischen ihren Seitenflächen aufweisen. Zum Ermöglichen der Lagermontage besteht dabei entweder der innere oder der äußere Lagering aus zwei axial getrennten Teilringen, die erst nach dem Einsetzen des Lagerkäfigs und dessen Befüllung mit den Kugelrollen durch eine Verschraubung miteinander verbunden werden. Die Laufbahnen in beiden Lagerringen werden darüber hinaus durch jeweils eine axialmittig umlaufende Ringnut in jeweils zwei Laufbahnsegmente unterteilt, so dass jeweils zwei einander benachbarte Kugelrollen mit sich abwechselnd kreuzenden Druckwinkelachsen derart zwischen den Lagerringen angeordnet sind, dass eine erste Kugelrolle mit ihrer Lauffläche auf zwei ersten sich diagonal gegenüberliegenden Laufbahnsegmenten und eine zweite Kugelrolle mit ihrer Lauffläche auf zwei zweiten sich diagonal gegenüberliegenden Laufbahnsegmenten des inneren und des äußeren Lagerrings abrollt.

Ein solches Kugelrollenlager hat sich jedoch in mehrfacher Hinsicht vor allem wegen der zweiteiligen Ausführung eines der beiden Lagerringe als nachteilig erwiesen. So erfordert die zweiteilige Ausführung eines der Lagerringe nicht nur durch die erhöhte Bauteilanzahl sondern auch durch die Notwendigkeit einer hochgenauen Herstellung der toleranzbehafteten Trennstelle zwischen beiden Teilringen einen erhöhten Fertigungs- und Montageaufwand, der sich nachteilig auf die Herstellungskosten eines solchen Kugelrollenlagers auswirkt. Darüber hinaus bewirkt die zweiteilige Ausführung eines der Lagerringe, dass es trotz aufwendiger Verspannung der beiden Teilringe im -Lagerbetrieb durch auftretende Setzeffekte zu einem Verbandlockern kommen kann, durch das sich das Kippspiel der Kugelrollen in nachteiliger Weise erhöht und ein vorzeitiger Verschleiß des Kugelrollenlagers die Folge ist. Ebenso ist es von Nachteil, dass mit geteilten Lagerringen keine transportfähige Baueinheit gebildet werden kann. Schließlich hat sich auch die einteilige Ausbildung des Lagerkäfigs als Fensterkäfig bei solchen Kugelrollenlagern als nachteilig erwiesen, da es bei bestimmten Lastzuständen des Lagers zu unterschiedlichen Relativdrehzahlen zwischen den mit ihren Druckwinkelachsen in die eine sowie in die andere Richtung geneigten Kugelrollen kommen kann, durch die es zu Verspanneffekten im Lagerkäfig sowie zu erhöhter Reibung zwischen den Kugelrollen und ihren Käfigtaschen im Lagerkäfig kommen kann und die ebenfalls zu einem vorzeitigen Verschleiß des Kugelrollenlagers beitragen.

### Aufgabe der Erfindung

Ausgehend von den dargelegten Nachteilen der Lösungen des bekannten Standes der Technik liegt der Erfindung deshalb die Aufgabe zu Grunde, ein Kugelrollenlager, insbesondere zur Aufnahme kombinierter Radial- und Axiallasten, zu konzipieren, welches einfach und kostengünstig herstellbar sowie mit geringem Aufwand zu einer transportfähigen Baueinheit montierbar ist und bei dem ein vorzeitiger Verschleiß durch erhöhtes Kippspiel der Kugelrollen sowie durch Verspanneffekte im Lagerkäfig ausgeschlossen sind.

### Beschreibung der Erfindung

Erfindungsgemäß wird diese Aufgabe bei einem Kugelrollenlager nach dem Oberbegriff des Anspruchs 1 derart gelöst, dass sowohl der äußere Lagerring als auch der innere Lagerring als einteilige Bauelemente ausgebildet sind, das Befüllen des Kugelrollenlagers mit den Kugelrollen nach dem an sich bekannten Axial-Kipp-Exzentermontageverfahren durch den Radialabstand zwischen den Lagerringen hindurch erfolgt und der Lagerkäfig durch zwei unabhängig voneinander wirkende und ebenfalls durch den Radialabstand zwischen den Lagerringen hindurch in das Kugelrollenlager einsetzbare, baugleiche Kammkäfige gebildet wird.

Der Erfindung liegt somit die Erkenntnis zugrunde, dass es durch die Anwendung des ursprünglich für reine Radialkugelrollenlager konzipierten Axial-Kipp-Exzentermontageverfahrens zum Befüllen eines für kombinierte Radial- und Axiallasten vorgesehenen Kugelrollenlagers mit den Kugelrollen möglich ist, beide Lagerringe eines solchen Kugelrollenlagers einteilig auszubilden und durch den damit sinkenden Fertigungs- und Montageaufwand erhebliche Einsparungen bei dessen Herstellungskosten zu erzielen. Außerdem bewirkt die einteilige Ausführung beider Lagerringe des erfindungsgemäß ausgebildeten Kugelrollenlagers, dass es nicht mehr zum Verbandlockkern von miteinander verspannten Teilringen und damit zu einer Erhöhung des Kippspiels der Kugelrollen kommen kann und dass das Kugelrollenlager nach seiner Montage eine transportsichere Baueinheit bildet. Gleichzeitig wird durch den Einsatz von zwei unabhängig voneinander wirkenden Kammkäfigen als Lagerkäfig erreicht, dass die mit ihren Druckwinkelachsen in die eine sowie in die andere Richtung geneigten Kugelrollen mit unterschiedlichen Relativdrehzahlen zueinander abrollen können und es somit nicht mehr zu Verspanneffekten sowie zu erhöhter Reibung zwischen den Kugelrollen und ihren Käfigtaschen im Lagerkäfig kommen kann.

Bevorzugte Ausgestaltungen und Weiterbildungen des erfindungsgemäß ausgebildeten Kugelrollenlagers werden in den Unteransprüchen beschrieben.

Danach ist es gemäß Anspruch 2 bei dem erfindungsgemäß ausgebildeten Kugelrollenlager vorgesehen, dass alle ersten, mit ihren Druckwinkelachsen in die eine Richtung geneigten Kugelrollen in entsprechenden Käfigtaschen des einen Kammkäfigs und alle zweiten, mit ihren Druckwinkelachsen in die andere Richtung geneigten Kugelrollen in entsprechenden Käfigtaschen des anderen Kammkäfigs geführt sind. Das bedeutet, das sowohl in dem einem als auch in dem anderen Kammkäfig jeweils nur jede zweite Kugelrolle geführt wird und dass beide identisch ausgebildeten Kammkäfige somit um eine Kugelrollenteilung versetzt zueinander im Kugelrollenlager angeordnet sind.

Gemäß den Ansprüchen 3 und 4 zeichnet sich das erfindungsgemäß ausgebildete Wälzlager desweiteren noch dadurch aus, dass die Kammkäfige jeweils einen rechtwinkligen Profilquerschnitt aufweisen, bei dem ein äußerer Profilschenkel radial zum inneren Lagerring und ein innerer Profilschenkel axial derart ins Lagerinnere ausgerichtet ist, dass die axialen Profilschenkel beider Kammkäfige zueinander weisen. In diese axialen Profilschenkel sind die jeweils als halbkreisförmige Ausnehmungen ausgebildeten Käfigtaschen eingeformt, die sich an ihrem tiefsten Punkt nahezu bis zum radialen Profilschenkel jedes Kammkäfigs erstrecken. Zusätzlich ist der Taschenboden jeder Käfigtasche noch mit einer Schräge ausgebildet, die jeweils der Neigung der Druckwinkelachse der in dieser Käfigtasche aufzunehmenden Kugelrolle angepasst und als Anlagefläche für die Lauffläche dieser Kugelrolle vorgesehen ist.

Nach Anspruch 5 ist es ein weiteres Merkmal des erfindungsgemäß ausgebildeten Kugelrollenlagers, dass beide Kammkäfige zwischen ihren Käfigtaschen mehrere an deren radiale Profilschenkel angeformte Laschen aufweisen, die aus deren axialen Profilschenkeln axial nach innen und radial schräg nach außen herausragen. Darunter ist zu verstehen, dass in den axialen Profilschenkel der Kammkäfige jeweils zwischen den Käfigtaschen zwei voneinander beabstandete und bis zum radialen Profilschenkel reichende, parallele Einschnitte eingearbeitet werden und der zwischen diesen Einschnitten angeordnete Schenkelabschnitt schräg nach außen aus dem axialen Profilschenkel herausgebogen bzw. herausgeformt wird. Mit den somit entstehenden Laschen ist es dann möglich, mittels eines Hilfswerkzeuges die Kammkäfige von den Lageraxialseiten her durch Einrasten in die Laufbahn des äußeren Lagerrings im Kugelrollenlager zu fixieren. Alternativ hierzu ist es jedoch auch möglich, derartige Laschen in gleicher Weise jeweils aus den radialen Profilschenkeln der Kammkäfige herauszuformen und die Kammkäfige durch Einrasten in die Laufbahn des inneren Lagerrings im Kugelrollenlager zu fixieren.

Eine zweckmäßige Weiterbildung des erfindungsgemäß ausgebildeten Kugelrollenlagers ist es nach Anspruch 6 darüber hinaus, dass die Kugelrollen im Lagerstillstand in einer Startstellung fixierbar sind, in der sie beim Anlauf des Kugelrollenlagers sofort in ihren der Neigung ihrer Druckwinkelachsen entsprechenden exakten Winkelpositionen sowie in Umfangsrichtung ausgerichtet sind. Dabei liegen die Kugelrollen jeweils wechselseitig mit einem Randbereich ihrer Laufflächen an den schräg ausgebildeten Taschenböden der Käfigtaschen des einen Kammkäfigs an und werden gleichzeitig mit einer ihrer Seitenflächen an den Unterseiten der Laschen des anderen Kammkäfigs ausgerichtet. Somit wird vermieden, dass es beim Anlauf des Kugelrollenlagers zu einem Taumeln der Kugelrollen auf ihren Laufbahnsegmenten quer zu deren Umfangsrichtung und damit zu Verspanneffekten zwischen den Kugelrollen und ihren Kammkäfigen kommen kann.

Schließlich wird es als vorteilhafte Ausgestaltung des erfindungsgemäß ausgebildeten Kugelrollenlagers durch Anspruch 7 noch vorgeschlagen, dass die Radien der Laufflächen der Kugelrollen geringfügig kleiner als die Radien der Laufbahnsegmente in den Lagerringen sind, so dass die Kugelrollen lediglich mit jeweils einer Punktberührung auf ihren Laufbahnsegmenten abrollen und das Kugelrollenlager somit im Wesentlichen als Vierpunktlager wirkt. Dabei sind die Einstichpunkte der Radien der Laufbahnsegmente jeweils geringfügig unter- und oberhalb der Teilkreisebene der Kugelrollen sowie jeweils geringfügig links und rechts neben der Lagerlängsachse angeordnet, so dass die Laufbahnen beider Lagerringe insgesamt ein gotisches Querschnittsprofil aufweisen.

### Kurze Beschreibung der Zeichnungen

Eine bevorzugte Ausführungsform eines erfindungsgemäß ausgebildeten Kugelrollenlagers wird nachfolgend unter Bezugnahme auf die beigefügten Zeichnungen näher erläutert. Dabei zeigen:
- Figur 1: eine Gesamtseitenansicht eines erfindungsgemäß ausgebildeten Kugelrollenlagers;
- Figur 2: den Querschnitt A - A durch das erfindungsgemäß ausgebildeten Kugelrollenlager gemäß Figur 1;
- Figur 3: eine vergrößerte Darstellung der Einzelheit X des erfindungsgemäß ausgebildeten Kugelrollenlagers gemäß Figur 2;
- Figur 4: eine vergrößerte Darstellung der beiden Kammkäfige des erfindungsgemäß ausgebildeten Kugelrollenlagers;
- Figur 5: eine schematisierte Darstellung eines Querschnitts durch den äußeren Lagerring des erfindungsgemäß ausgebildeten Kugelrollenlagers mit anlaufenden Kugelrollen.

### Ausführliche Beschreibung der Zeichnungen

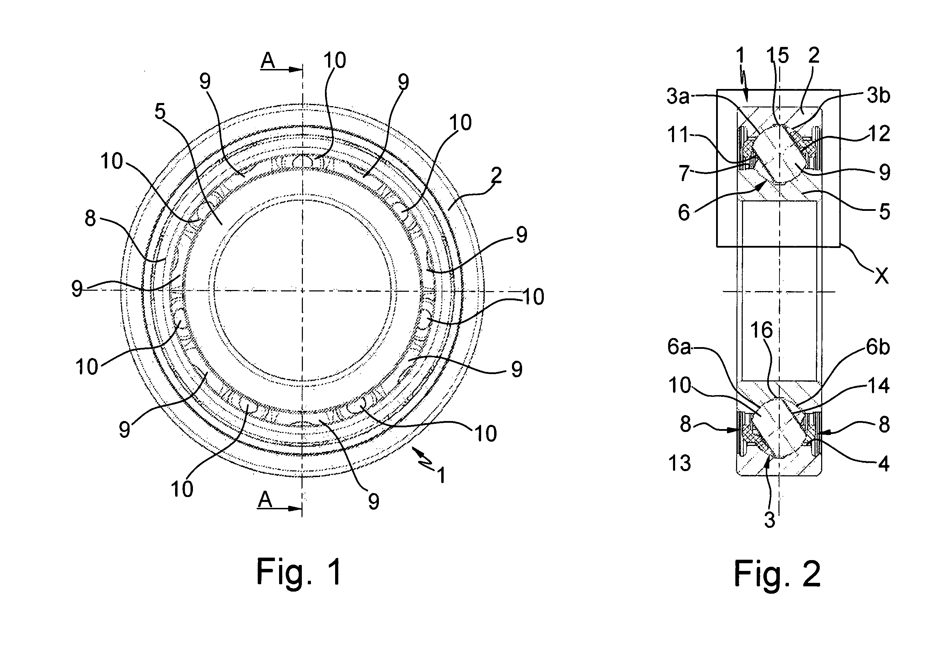

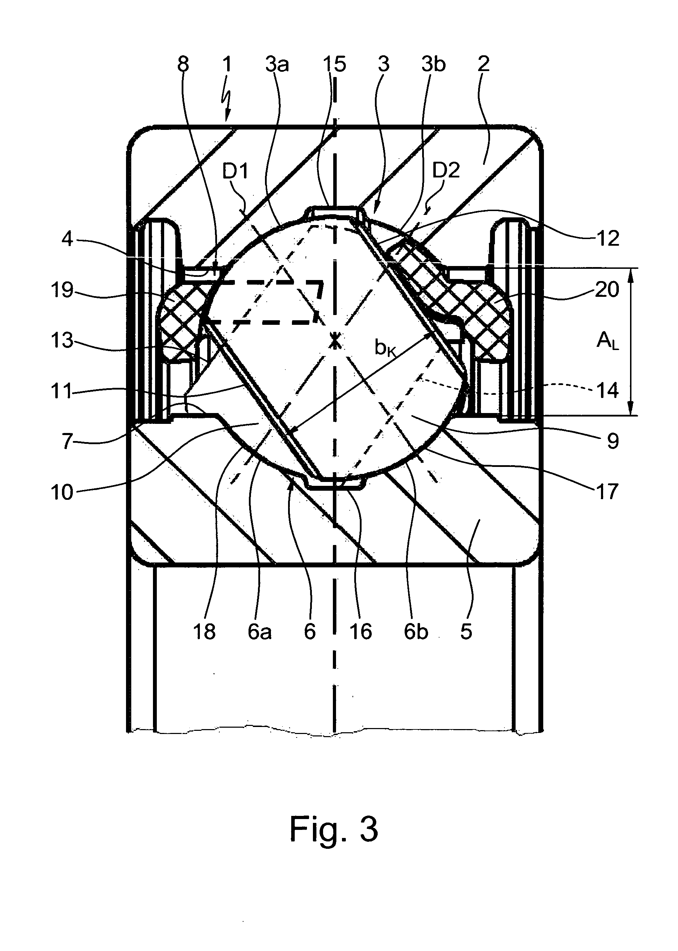

Aus den Figuren 1 und 2 geht deutlich ein für kombinierte Radial- und Axiallasten geeignetes Kugelrollenlager 1 hervor, welches im Wesentlichen aus einem äußeren Lagerring 2 mit einer rillenförmigen Laufbahn 3 an dessen Innenseite 4 und einem inneren Lagerring 5 mit einer rillenförmigen Laufbahn 6 an dessen Außenseite 7 sowie aus einer Vielzahl zwischen diesen Lagerringen 2, 5 in den Laufbahnen 3, 6 abrollender Kugelrollen 9, 10 besteht, die in Umfangsrichtung durch einen Lagerkäfigs 8 in gleichmäßigen Abständen zueinander gehalten werden. In den Figuren 2 und 3 ist dabei erkennbar, dass die Kugelrollen 9, 10 jeweils zwei symmetrisch von einer Kugelgrundform abgeflachte, parallel zueinander angeordnete Seitenflächen 11, 12 und 13, 14 aufweisen sowie mit einer größer als der Radialabstand A_{L} zwischen der Innenseite 4 und der Au-βenseite 7 der Lagerringe 2, 5 bemessenen Breite B_{K} zwischen diesen Seitenflächen 11, 12 und 13, 14 ausgebildet sind. Ebenso ist diesen Zeichnungen entnehmbar, dass die Laufbahnen 3, 6 in beiden Lagerringen 2, 5 durch jeweils eine axialmittig umlaufende Ringnut 15, 16 in jeweils zwei Laufbahnsegmente 3a, 3b und 6a, 6b unterteilt werden und dass jeweils zwei einander benachbarte Kugelrollen 9, 10 derart mit sich abwechselnd kreuzenden Druckwinkelachsen D1, D2 zwischen den Lagerringen 2, 5 angeordnet sind, dass eine erste Kugelrolle 9 mit ihrer Lauffläche 17 auf zwei ersten sich diagonal gegenüberliegenden Laufbahnsegmenten 3a, 6b und eine zweite Kugelrolle 10 mit ihrer Lauffläche 18 auf zwei zweiten sich diagonal gegenüberliegenden Laufbahnsegmenten 3b, 6a des inneren und des äußeren Lagerrings 2, 5 abrollt.

Um ein solches Kugelrollenlager 1 vor allem einfach und kostengünstig herstellen sowie mit geringem Aufwand zu einer transportfähigen Baueinheit montieren zu können, sind, wie insbesondere aus Figur 3 hervorgeht, sowohl der äu-βere Lagerring 2 als auch der innere Lagerring 5 erfindungsgemäß als einteilige Bauelemente ausgebildet, während der Lagerkäfig 8 durch zwei unabhängig voneinander wirkende und durch den Radialabstand A_{L} zwischen den Lagerringen 2, 5 hindurch in das Kugelrollenlager 1 einsetzbare, baugleiche Kammkäfige 19, 20 gebildet wird. Das Befüllen des Kugelrollenlagers 1 mit den Kugelrollen 9, 10 erfolgt dabei nach dem an sich bekannten Axial-Kipp-Exzentermontageverfahren durch den Radialabstand A_{L} zwischen den Lagerringen 2, 5 hindurch, wobei das Schrägstellen der Kugelrollen 9, 10 im letzten Verfahrensschritt zusammen mit dem Einsetzen der Kammkäfige 19, 20 erfolgt.

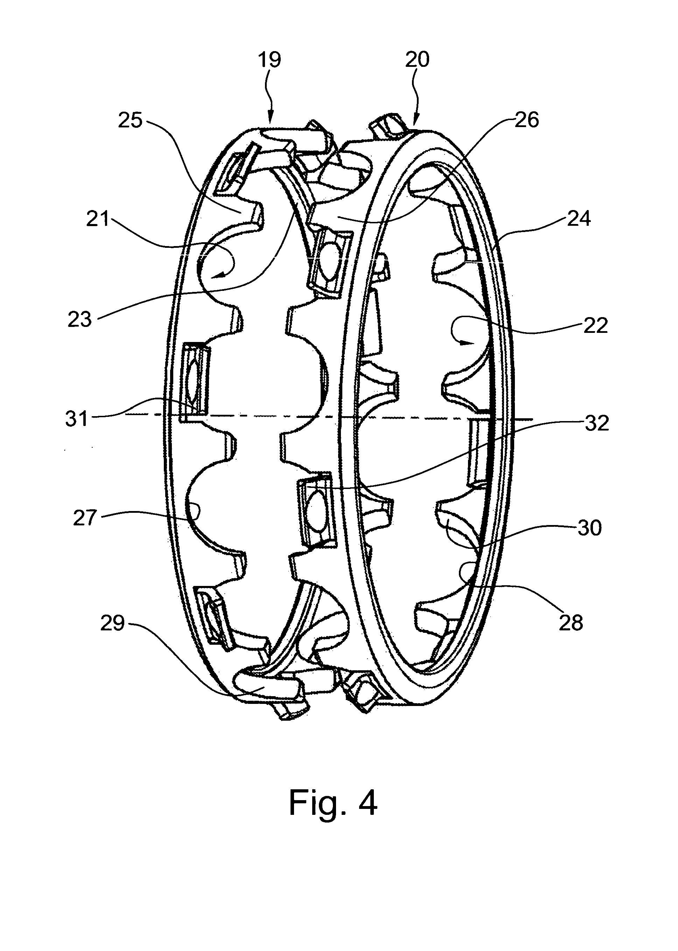

Die Figuren 3 und 4 zeigen desweiteren, dass alle ersten, mit ihren Druckwinkelachsen D1 in die eine Richtung geneigten Kugelrollen 9 in entsprechenden Käfigtaschen 21 des einen Kammkäfigs 19 und alle zweiten, mit ihren Druckwinkelachsen D2 in die andere Richtung geneigten Kugelrollen 10 in entsprechenden Käfigtaschen 22 des anderen Kammkäfigs 20 geführt sind. Dadurch wird in jedem Kammkäfig 19, 20 jeweils nur jede zweite Kugelrolle 9, 10 geführt, so dass beide identisch ausgebildeten Kammkäfige 19, 20 um eine Kugelrollenteilung versetzt zueinander im Kugelrollenlager 1 angeordnet sind.

Ein weiteres kennzeichnendes Merkmal der Kammkäfige 19, 20 ist es, dass diese, wie in Figur 3 angedeutet, jeweils einen rechtwinkligen Profilquerschnitt aufweisen und, wie in Figur 4 näher bezeichnet, mit einem äußeren, radial zum inneren Lagerring 5 ausgerichteten Profilschenkel 23, 24 sowie einem inneren, axial ins Lagerinnere ausgerichteten Profilschenkel 25, 26 ausgebildet sind. In diese axialen Profilschenkel 25, 26 sind, wie ebenfalls aus Figur 4 ersichtlich ist, die jeweils als halbkreisförmige Ausnehmungen ausgebildeten Käfigtaschen 21, 22 eingeformt, die sich an ihrem tiefsten Punkt nahezu bis zum radialen Profilschenkel 23, 24 jedes Kammkäfigs 19, 20 erstrecken. Zusätzlich ist der Taschenboden 27, 28 jeder Käfigtasche 21, 22 noch mit einer Schräge 29, 30 ausgebildet, die jeweils der Neigung der Druckwinkelachse D1, D2 der in dieser Käfigtasche 21, 22 aufzunehmenden Kugelrolle angepasst und als Anlagefläche für die Lauffläche 17, 18 dieser Kugelrolle 9, 10 vorgesehen ist.

Darüber hinaus ist in Figur 4 dargestellt, dass beide Kammkäfige 19, 20 jeweils zwischen ihren Käfigtaschen 21, 22 mehrere an deren radiale Profilschenkel 23, 24 angeformte Laschen 31, 32 aufweisen, die aus deren axialen Profilschenkeln 25, 26 schräg nach außen herausragen. Mit diesen Laschen 31, 32 ist es möglich, die Kammkäfige 19, 20 durch Einrasten in die Laufbahn 3 des äußeren Lagerrings 2 im Kugelrollenlager 1 zu fixieren, wobei zusammen mit dem Einrasten der Kammkäfige 19, 20 das Schrägstellen der Kugelrollen 9, 10 erfolgt. Gleichzeitig tragen die Laschen 31, 32 dazu bei, dass die Kugelrollen 9, 10 im Lagerstillstand zur Vermeidung eines Taumelns auf ihren Laufbahnsegmenten 3a, 3b, 6a, 6b beim Anlauf des Kugelrollenlagers 1 in einer der Darstellung in Figur 3 entsprechenden Startstellung fixierbar sind, bei der diese unter der Neigung ihrer Druckwinkelachsen D1, D2 jeweils mit einem Randbereich ihrer Laufflächen 17, 18 an den Taschenböden 27, 28 der Käfigtaschen 21, 22 des einen Kammkäfigs 19, 20 und mit einer ihrer Seitenflächen 12, 13 an den Unterseiten der Laschen 31, 32 des anderen Kammkäfigs 20, 19 anliegen.

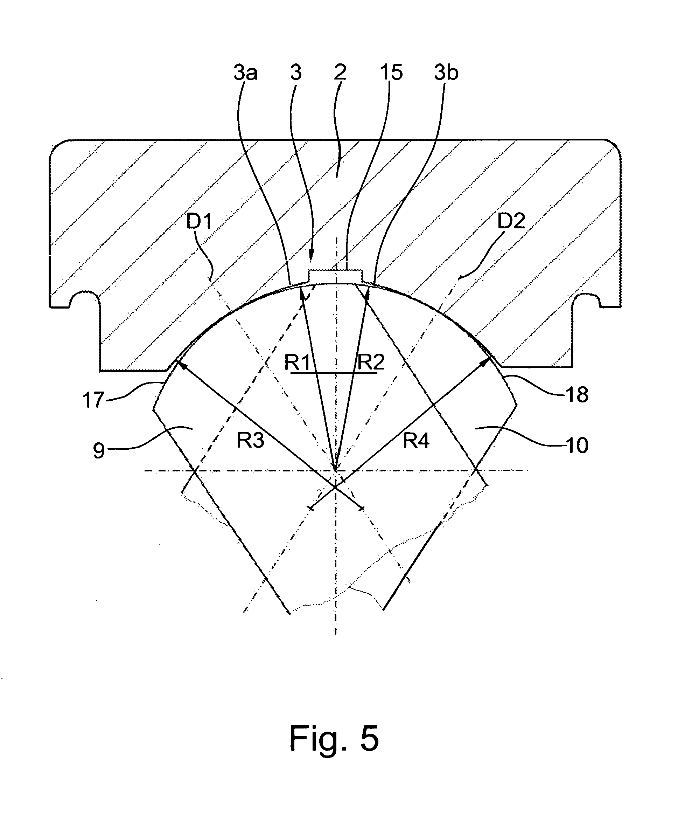

Schließlich wird in Figur 5 noch gezeigt, dass die Radien R1, R2 der Laufflächen 17, 18 der Kugelrollen 9, 10 geringfügig kleiner als die Radien R3, R4 der Laufbahnsegmente 3a, 3b, 6a, 6b in den Lagerringen 2, 5 sind, so dass die Kugelrollen 9, 10 lediglich mit jeweils einer Punktberührung auf ihren Laufbahnsegmenten 3a, 3b, 6a, 6b abrollen und das Kugelrollenlager somit im Wesentlichen als Vierpunktlager wirkt. Deutlich sichtbar sind dabei sind die Einstichpunkte der Radien der Laufbahnsegmente jeweils geringfügig unter- und oberhalb der Teilkreisebene der Kugelrollen 9, 10 sowie jeweils geringfügig links und rechts neben der Lagerlängsachse angeordnet, so dass die Laufbahnen 3, 6 beider Lagerringe 2, 5 insgesamt ein gotisches Querschnittsprofil aufweisen.

### Bezugszahlenliste

- 1: Kugelrollenlager
- 2: äußerer Lagerring
- 3: Laufbahn in 4
- 3a: Laufbahnsegment von 3
- 3b: Laufbahnsegment von 3
- 4: Innenseite von 2
- 5: innerer Lagerring
- 6: Laufbahn in 7
- 6a: Laufbahnsegment von 7
- 6b: Laufbahnsegment von 7
- 7: Außenseite von 5
- 8: Lagerkäfig
- 9: Kugelrollen
- 10: Kugelrollen
- 11: Seitenfläche von 10
- 12: Seitenfläche von 10
- 13: Seitenfläche von 11
- 14: Seitenfläche von 11
- 15: Ringnut in 3
- 16: Ringnut in 6
- 17: Lauffläche von 9
- 18: Lauffläche von 10
- 19: Kammkäfig für 9
- 20: Kammkäfig für 10
- 21: Käfigtaschen in 19
- 22: Käfigtaschen in 20
- 23: radialer Profilschenkel von 19
- 24: radialer Profilschenkel von 20
- 25: axialer Profilschenkel von 19
- 26: axialer Profilschenkel von 20
- 27: Taschenboden von 21
- 28: Taschenboden von 22
- 29: Schräge an 27
- 30: Schräge an 28
- 31: Laschen an 19
- 32: Laschen an 20
- A_{L}: Radialabstand zwischen 2 und 5
- B_{K}: Breite von 9 und 10
- D1: Druckwinkelachse von 9
- D2: Druckwinkelachse von 10
- R1: Radius von 17
- R2: Radius von 18
- R3: Radius von 3a
- R4: Radius von 3b

## Patentansprüche

1. Kugelrollenlager (1), insbesondere zur Aufnahme kombinierter Radial- und Axiallasten, im Wesentlichen bestehend aus einem äußeren Lagerring (2) mit einer rillenförmigen Laufbahn (3) an dessen Innenseite (4) und einem inneren Lagerring (5) mit einer rillenförmigen Laufbahn (6) an dessen Außenseite (7) sowie aus einer Vielzahl zwischen diesen Lagerringen (2, 5) in den Laufbahnen (3, 6) abrollender und in Umfangsrichtung durch einen Lagerkäfig (8) in gleichmäßigen Abständen zueinander gehaltener Kugelrollen (9, 10), die jeweils zwei symmetrisch von einer Kugelgrundform abgeflachte, parallel zueinander angeordnete Seitenflächen (11, 12, 13, 14) sowie eine größer als der Radialabstand (A_{L}) zwischen der Innenseite (4) und der Außenseite (7) der Lagerringe (2, 5) bemessene Breite (B_{K}) zwischen diesen Seitenflächen (11, 12, 13, 14) aufweisen, wobei die Laufbahnen (3, 6) in beiden Lagerringen (2, 5) durch jeweils eine axialmittig umlaufende Ringnut (15, 16) in jeweils zwei Laufbahnsegmente (3a, 3b und 6a, 6b) unterteilt werden und jeweils zwei einander benachbarte Kugelrollen (9, 10) derart mit sich abwechselnd kreuzenden Druckwinkelachsen (D1, D2) zwischen den Lagerringen (2, 5) angeordnet sind, dass eine erste Kugelrolle (9) mit ihrer Lauffläche (17) auf zwei ersten sich diagonal gegenüberliegenden Laufbahnsegmenten (3a, 6b) und eine zweite Kugelrolle (10) mit ihrer Lauffläche (18) auf zwei zweiten sich diagonal gegenüberliegenden Laufbahnsegmenten (3b, 6a) des inneren und des äußeren Lagerrings (2, 5) abrollt, **dadurch gekennzeichnet, dass** sowohl der äußere Lagerring (2) als auch der innere Lagerring (5) als einteilige Bauelemente ausgebildet sind, das Befüllen des Kugelrollenlagers (1) mit den Kugelrollen (9, 10) nach dem an sich bekannten Axial-Kipp-Exzentermontageverfahren durch den Radialabstand (A_{L}) zwischen den Lagerringen (2, 5) hindurch erfolgt und der Lagerkäfig (8) durch zwei unabhängig voneinander wirkende und ebenfalls durch den Radialabstand (A_{L}) zwischen den Lagerringen (2, 5) hindurch in das Kugelrollenlager (1) einsetzbare, baugleiche Kammkäfige (19, 20) gebildet wird.

2. Kugelrollenlager (1) nach Anspruch 1, **dadurch gekennzeichnet, dass** alle ersten, mit ihren Druckwinkelachsen (D1) in die eine Richtung geneigten Kugelrollen (9) in entsprechenden Käfigtaschen (21) des einen Kammkäfigs (19) und alle zweiten, mit ihren Druckwinkelachsen (D2) in die andere Richtung geneigten Kugelrollen (10) in entsprechenden Käfigtaschen (22) des anderen Kammkäfigs (20) geführt sind.

3. Kugelrollenlager (1) nach Anspruch 2, **dadurch gekennzeichnet, dass** die Kammkäfige (19, 20) jeweils einen rechtwinkligen Profilquerschnitt mit einem äußeren, radial zum inneren Lagerring (5) ausgerichteten Profilschenkel (23, 24) und einem inneren, axial ins Lagerinnere ausgerichteten Profilschenkel (25, 26) aufweisen, in welchen die als halbkreisförmige Ausnehmungen ausgebildeten Käfigtaschen (21, 22) eingeformt sind.

4. Kugelrollenlager (1) nach Anspruch 3, **dadurch gekennzeichnet, dass** die Käfigtaschen (21, 22) sich an ihrem tiefsten Punkt nahezu bis zum radialen Profilschenkel (23, 24) jedes Kammkäfigs (19, 20) erstrecken und der Taschenboden (27, 28) jeder Käfigtasche (21, 22) mit einer der Neigung der Druckwinkelachse (D1, D2) der in dieser Käfigtasche (21, 22) aufzunehmenden Kugelrolle (9, 10) angepassten Schräge (29, 30) ausgebildet ist.

5. Kugelrollenlager (1) nach Anspruch 4, **dadurch gekennzeichnet, dass** beide Kammkäfige (19, 20) zwischen ihren Käfigtaschen (21, 22) mehrere an deren radiale Profilschenkel (23 24) angeformte und aus deren axialen Profilschenken (25, 26) axial nach innen und radial schräg nach außen herausragende Laschen (31, 32) aufweisen, mit denen die Kammkäfige (19, 20) durch Einrasten in die Laufbahn (3) des äußeren Lagerrings (2) im Kugelrollenlager (1) fixierbar sind.

6. Kugelrollenlager (1) nach Anspruch 5, **dadurch gekennzeichnet, dass** die Kugelrollen (9, 10) im Lagerstillstand jeweils mit einem Randbereich ihrer Laufflächen (17, 18) an den Taschenböden (27, 28) der Käfigtaschen (21, 22) des einen Kammkäfigs (19, 20) und mit einer ihrer Seitenflächen (12, 13) an den Unterseiten der Laschen (31, 32) des anderen Kammkäfigs (20, 19) anliegend in einer der Neigung ihrer Druckwinkelachsen (D1, D2) entsprechenden Startstellung fixierbar sind.

7. Kugelrollenlager (1) nach Anspruch 1, **dadurch gekennzeichnet, dass** die Radien (R1, R2) der Laufflächen (17, 18) der Kugelrollen (9, 10) geringfügig kleiner als die Radien (R3, R4) der Laufbahnsegmente (3a, 3b, 6a, 6b) in den Lagerringen (2, 5) sind, so dass die Laufbahnen (3, 6) beider Lagerringe (2, 5) insgesamt ein gotisches Querschnittsprofil aufweisen und die Kugelrollen (9, 10) lediglich mit jeweils einer Punktberührung auf ihren Laufbahnsegmenten (3a, 3b, 6a, 6b) abrollen.

## Claims

1. Ball roller bearing (1), in particular for accommodating combined radial and axial loads, composed substantially of an outer bearing ring (2) with a channel-shaped raceway (3) on the inner side (4) thereof, and of an inner bearing ring (5) with a channel-shaped raceway (6) on the outer side (7) thereof, and of a multiplicity of ball rollers (9, 10), which ball rollers roll between said bearing rings (2, 5) in the raceways (3, 6) and which ball rollers are held with uniform spacings to one another in the circumferential direction by a bearing cage (8) and which ball rollers have in each case two side surfaces (11, 12, 13, 14), which side surfaces are flattened symmetrically proceeding from a spherical basic shape and are arranged parallel to one another, and which ball rollers also have a width (B_{K}) between said side surfaces (11, 12, 13, 14), which width is dimensioned to be larger than the radial spacing (A_{L}) between the inner side (4) and the outer side (7) of the bearing rings (2, 5), wherein the raceways (3, 6) in the two bearing rings (2, 5) are divided by in each case one axially centrally encircling annular groove (15, 16) into in each case two raceway segments (3a, 3b and 6a, 6b), and in each case two ball rollers (9, 10) which are adjacent to one another are arranged with alternately crossing contact angle axes (D1, D2) between the bearing rings (2, 5), such that a first ball roller (9) rolls with its running surface (17) on two first diagonally opposite raceway segments (3a, 6b) and a second ball roller (10) rolls with its running surface (18) on two second diagonally opposite raceway segments (3b, 6a) of the inner and outer bearing rings (2, 5), **characterized in that** both the outer bearing ring (2) and the inner bearing ring (5) are formed as unipartite components, the ball roller bearing (1) is filled with the ball rollers (9, 10) according to the axial-tilt eccentric assembly process, which is known per se, through the radial spacing (A_{L}) between the bearing rings (2, 5), and the bearing cage (8) is formed by two structurally identical comb-type cages (19, 20) which act independently of each other and which can likewise be inserted into the ball roller bearing (1) through the radial spacing (A_{L}) between the bearing rings (2, 5).

2. Ball roller bearing (1) according to Claim 1, **characterized in that** all of the first ball rollers (9), which are inclined with their contact angle axes (D1) in one direction, are guided in corresponding cage pockets (21) of one comb-type cage (19), and all of the second ball rollers (10), which are inclined with their contact angle axes (D2) in the other direction, are guided in corresponding cage pockets (22) of the other comb-type cage (20).

3. Ball roller bearing (1) according to Claim 2, **characterized in that** the comb-type cages (19, 20) each have a rectangular profile cross section with an outer profiled limb (23, 24) aligned radially toward the inner bearing ring (5) and with an inner profiled limb (25, 26) aligned axially into the bearing interior, in which profiled limbs are formed the cage pockets (21, 22) which are designed as semicircular recesses.

4. Ball roller bearing (1) according to Claim 3, **characterized in that** the cage pockets (21, 22), at their lowest point, extend approximately as far as the radial profiled limb (23, 24) of each comb-type cage (19, 20), and the pocket base (27, 28) of each cage pocket (21, 22) is formed with a bevel (29, 30) matched to the inclination of the contact angle axis (D1, D2) of the ball roller (9, 10) to be held in said cage pocket (21, 22).

5. Ball roller bearing (1) according to Claim 4, **characterized in that** the two comb-type cages (19, 20) have, between their cage pockets (21, 22), a plurality of lugs (31, 32) which are integrally formed on the radial profiled limbs (23, 24) of said comb-type cages and which project axially inward and radially obliquely outward from the axial profiled limbs (25, 26) of said comb-type cages, by means of which lugs the comb-type cages (19, 20) can be fixed in the ball roller bearing (1) by being latched into the raceway (3) of the outer bearing ring (2).

6. Ball roller bearing (1) according to Claim 5, **characterized in that**, when the bearing is at a standstill, the ball rollers (9, 10), bearing in each case with an edge region of their running surfaces (17, 18) against the pocket bases (27, 28) of the cage pockets (21, 22) of one comb-type cage (19, 20) and with one of their side surfaces (12, 13) against the undersides of the lugs (31, 32) of the other comb-type cage (20, 19), can be fixed in a starting position corresponding to the inclination of the contact angle axes (D1, D2) of said ball rollers.

7. Ball roller bearing (1) according to Claim 1, **characterized in that** the radii (R1, R2) of the running surfaces (17, 18) of the ball rollers (9, 10) are slightly smaller than the radii (R3, R4) of the raceway segments (3a, 3b, 6a, 6b) in the bearing rings (2, 5), such that the raceways (3, 6) of the two bearing rings (2, 5) have, overall, a gothic cross-sectional profile and the ball rollers (9, 10) roll with in each case only punctiform contact on the raceway segments (3a, 3b, 6a, 6b) of said bearing rings.

## Revendications

1. Palier à rouleaux sphériques (1), en particulier pour recevoir des charges combinées radiales et axiales, constitué essentiellement d'une bague de palier externe (2) avec un chemin de roulement (3) en forme de gorge sur son côté intérieur (4) et d'une bague de palier interne (5) avec un chemin de roulement (6) en forme de gorge sur son côté extérieur (7), ainsi que d'une pluralité de rouleaux sphériques (9, 10) roulant dans les chemins de roulement (3, 6) entre ces bagues de palier (2, 5) et maintenus à distance régulière les uns des autres dans la direction périphérique par une cage de palier (8), lesquels rouleaux sphériques présentent à chaque fois deux faces latérales (11, 12, 13, 14) disposées parallèlement l'une à l'autre, aplaties symétriquement à partir d'une forme de base sphérique, et une largeur (B_{K}) entre ces faces latérales (11, 12, 13, 14) étant supérieure à la distance radiale (A_{L}) entre le côté intérieur (4) et le côté extérieur (7) des bagues de palier (2, 5), les chemins de roulement (3, 6) dans les deux bagues de palier (2, 5) étant divisés par une rainure annulaire (15, 16) périphérique axialement centrale respective dans deux segments de chemin de roulement respectifs (3a, 3b et 6a, 6b), et à chaque fois deux rouleaux sphériques mutuellement adjacents (9, 10) étant disposés avec leurs axes angulaires de pression (D1, D2) se croisant de manière alternée entre les bagues de palier (2, 5), de telle sorte qu'un premier rouleau sphérique (9) roule avec sa surface de roulement (17) sur deux premiers segments de chemin de roulement (3a, 6b) diagonalement opposés et qu'un deuxième rouleau sphérique (10) roule avec sa surface de roulement (18) sur deux deuxièmes segments de chemin de roulement (3b, 6a) diagonalement opposés de la bague de palier interne (5) et de la bague de palier externe (2), **caractérisé en ce qu'**à la fois la bague de palier externe (2) et la bague de palier interne (5) sont réalisées sous forme de composants d'une seule pièce, le garnissage du palier à rouleaux sphériques (1) avec les rouleaux sphériques (9, 10) s'effectue selon le procédé de montage excentrique à basculement axial connu en soi à travers la distance radiale (A_{L}) entre les bagues de palier (2, 5) et la cage de palier (8) est formée par deux cages en peigne (19, 20) de construction identique agissant indépendamment l'une de l'autre et pouvant également être insérées à travers la distance radiale (A_{L}) entre les bagues de palier (2, 5) dans le palier à rouleaux sphériques (1).

2. Palier à rouleaux sphériques (1) selon la revendication 1, **caractérisé en ce que** tous les premiers rouleaux sphériques (9) inclinés avec leurs axes angulaires de pression (D1) dans une direction sont guidés dans des poches de cage correspondantes (21) de l'une des cages en peigne (19) et tous les deuxièmes rouleaux sphériques (10) inclinés avec leurs axes angulaires de pression (D2) dans l'autre direction sont guidés dans des poches de cage correspondantes (22) de l'autre cage en peigne (20).

3. Palier à rouleaux sphériques (1) selon la revendication 2, **caractérisé en ce que** les cages en peigne (19, 20) présentent à chaque fois une section transversale profilée rectangulaire avec une branche profilée extérieure (23, 24) orientée radialement par rapport à la bague de palier interne (5), et une branche profilée intérieure (25, 26) orientée axialement à l'intérieur du palier, dans lesquelles sont formées les poches de cage (21, 22) réalisées sous forme d'évidements semi-circulaires.

4. Palier à rouleaux sphériques (1) selon la revendication 3, **caractérisé en ce que** les poches de cage (21, 22) s'étendent à leur point le plus profond pratiquement jusqu'à la branche profilée radiale (23, 24) de chaque cage en peigne (19, 20), et le fond de poche (27, 28) de chaque poche de cage (21, 22) est réalisé avec un biseautage (29, 30) adapté à l'inclinaison de l'axe angulaire de pression (D1, D2) du rouleau sphérique (9, 10) devant être logé dans cette poche de cage (21, 22).

5. Palier à rouleaux sphériques (1) selon la revendication 4, **caractérisé en ce que** les deux cages en peigne (19, 20) présentent entre leurs poches de cage (21, 22) plusieurs pattes (31, 32) façonnées sur leurs branches profilées radiales (23, 24) et saillant axialement vers l'intérieur et radialement obliquement vers l'extérieur hors de leurs branches profilées axiales (25, 26), avec lesquelles les cages en peigne (19, 20) peuvent être fixées par encliquetage dans le chemin de roulement (3) de la bague de palier externe (2) dans le palier à rouleaux sphériques (1).

6. Palier à rouleaux sphériques (1) selon la revendication 5, **caractérisé en ce que** les rouleaux sphériques (9, 10) dans l'état immobile du palier peuvent être fixés dans une position de départ correspondant à l'inclinaison de leurs axes angulaires de pression (D1, D2), en s'appliquant à chaque fois avec une région de bord de leurs surfaces de roulement (17, 18) contre les fonds de poche (27, 28) des poches de cage (21, 22) de l'une des cages en peigne (19, 20) et avec l'une de leurs faces latérales (12, 13) contre les côtés inférieurs des pattes (31, 32) de l'autre cage en peigne (20, 19).

7. Palier à rouleaux sphériques (1) selon la revendication 1, **caractérisé en ce que** les rayons (R1, R2) des surfaces de roulement (17, 18) des rouleaux sphériques (9, 10) sont légèrement plus petits que les rayons (R3, R4) des segments de chemin de roulement (3a, 3b, 6a, 6b) dans les bagues de palier (2, 5), de sorte que les chemins de roulement (3, 6) des deux bagues de palier (2, 5) présentent dans l'ensemble un profil en section transversale gothique et que les rouleaux sphériques (9, 10) roulent uniquement avec à chaque fois un contact ponctuel sur leurs segments de chemin de roulement (3a, 3b, 6a, 6b).
